# EUROPÄISCHE PATENTSCHRIFT

(11) **EP 3 362 251 B1**
(45) Veröffentlichungstag und Bekanntmachung des Hinweises auf die Patenterteilung: **19.06.2019**
(21) Anmeldenummer: 17706150.4
(22) Anmeldetag: 15.02.2017
(51) Int. Cl.: B29C 49/42, B65G 65/23, B29C 49/06, B29C 49/12, B29C 49/36, B29K 67/00, B29L 31/00

(54) **VERFAHREN UND VORRICHTUNG ZUR BEREITSTELLUNG EINES VORRATES AN VORFORMLINGEN**
METHOD AND DEVICE FOR PREPARING A SUPPLY OF PREFORMS
PROCÉDÉ ET DISPOSITIF POUR LA PRÉPARATION D'UNE RÉSERVE DE PRÉFORMES

(30) Priorität: 22.03.2016 DE 102016003377
(43) Veröffentlichungstag der Anmeldung: 22.08.2018
(73) Patentinhaber: KHS Corpoplast GmbH, 22145 Hamburg (DE)
(72) Erfinder: HELLER, Alexander, 22941 Bargteheide (DE); HOLLER, Dieter, 23843 Bad Oldesloe (DE)
(74) Vertreter: Meissner Bolte Partnerschaft mbB
(86) Internationale Anmeldenummer: PCT/EP2017/000210
(87) Internationale Veröffentlichungsnummer: WO 2017/162326

(56) Entgegenhaltungen:
- WO-A1-2012/126129
- DE-U1- 20 308 513
- US-A1- 2015 151 457
- US-A1- 2015 151 478
- US-B2- 9 199 405

## Beschreibung

Die Erfindung betrifft Verfahren zum Bereitstellen eines Vorformlingsvorrates in einer Speichervorrichtung, welche insbesondere dem Zuführen von Vorformlingen zu einer Vereinzelungs- und Sortiervorrichtung für Vorformlinge dient. Die Speichervorrichtung weist einen Vorratsbehälter für Vorformlinge und eine Hub-Kipp-Vorrichtung zur Befüllung des Vorratsbehälters mit in Transporteinheiten gebindeweise zugeführten Vorformlingen auf, wobei die Hub-Kipp-Vorrichtung ausgeführt ist zur Aufnahme wenigstens einer solchen Transporteinheit, zum Anheben dieser Transporteinheit und zum Entleeren des Inhalts der Transporteinheit in den Vorratsbehälter durch Kippen.

Weiterhin betrifft die Erfindung eine Speichervorrichtung für Vorformlinge für die Bereitstellung eines Vorformlingsvorrates und für das Zuführen von Vorformlingen zu einer Vereinzelungs- und Sortiervorrichtung für Vorformlinge. Gattungsgemäße Speichervorrichtungen sind mit einem Vorratsbehälter für Vorformlinge ausgestattet und weisen weiterhin eine Hub-Kipp-Vorrichtung zur Befüllung des Vorratsbehälters auf, wobei dieser Hub-Kipp-Vorrichtung gebindeweise Vorformlinge zugeführt werden. Dazu sind die Vorformlinge gebindeweise in Transporteinheiten aufgenommen. Die Hub-Kipp-Vorrichtung ist so ausgeführt, dass wenigstens eine solche Transporteinheit aufgenommen werden kann. Diese Transporteinheit mit den darin enthaltenen Vorformlingen wird von der Hub-Kipp-Vorrichtung angehoben. Insbesondere ist bekannt, dass dazu ein geeigneter Hubantrieb vorgesehen ist. Bei Erreichen einer Entleerungsposition, die gegenüber einer Aufnahmeposition für die Aufnahme der Transporteinheit erhöht angeordnet ist, erfolgt ein z.B. automatisiertes Entleeren des Inhalts der Transporteinheit in den Vorratsbehälter. Dazu weist die Hub-Kipp-Vorrichtung z.B. einen geeigneten Kippantrieb auf. Es ist im Stand der Technik auch bekannt, für die Hub- und die Kippbewegung einen gemeinsamen Antrieb zu verwenden. Es ist insbesondere auch bekannt, die Hub- und die Kippbewegung weitgehend automatisiert ablaufen zu lassen. Es ist aber auch möglich, die Bewegungsabläufe benutzergesteuert ablaufen zu lassen.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine, also innerhalb einer Vorrichtung zur blasumformenden Herstellung von Fertigbehältern aus Vorformlingen, unterschiedlichen Bearbeitungsstationen zugeführt. Typischerweise weist eine derartige Blasformungsmaschine bzw. Blasmaschine eine Aufheizvorrichtung sowie eine Blaseinrichtung auf, in deren Bereich der zuvor in der Aufheizvorrichtung temperierte Vorformling durch biaxiale Orientierung zu einem Behälter expandiert wird. Die Expansion erfolgt z.B. mit Hilfe von Druckluft, die in den zu expandierenden Vorformling eingeleitet wird. Der verfahrenstechnische Ablauf bei einer derartigen Expansion des Vorformlings wird in der DE 43 40 291 A erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasumformvorganges bzw. Blasvorganges. Es sind auch andere Fluide zur Blasformung bekannt, insbesondere auch die Verwendung des in den Behälter abzufüllenden Füllgutes als Blasfluid. Die nachfolgende allgemeine Beschreibung erfolgt am Beispiel einer mit Druckgas arbeitenden Blasmaschine. Die Erfindung ist aber nicht auf solche Speichervorrichtungen für Vorformlinge für die Bereitstellung eines Vorformlingsvorrates beschränkt, die dem Zuführen von Vorformlingen nach entsprechender Vereinzelung und Sortierung an eine solche Blasmaschine dienen.

Der grundsätzliche Aufbau einer Blasstation zur Behälterformung wird in der DE 42 12 583 A beschrieben. Möglichkeiten zur Temperaturkonditionierung der Vorformlinge werden in der DE 23 52 926 A erläutert. Auf die genannten Schriften wird explizit Bezug genommen und insofern erübrigt sich eine weitere Beschreibung zu Blasstationen und zur Temperaturkonditionierung.

Innerhalb der Vorrichtung zur Blasformung können die Vorformlinge sowie die geblasenen Behälter mit Hilfe unterschiedlicher Transport- und Handhabungseinrichtungen transportiert werden. Bekannt ist z.B. die Verwendung von Transportdornen, auf die die Vorformlinge aufgesteckt werden. Die Vorformlinge können aber auch mit anderen Trageinrichtungen gehandhabt und transportiert werden. Die Verwendung von Greifzangen zur Handhabung und zum Transport von Vorformlingen und die Verwendung von Klemmdornen, die zur Halterung in einen Mündungsbereich des Vorformlings einführbar sind, gehören ebenfalls zu den verfügbaren Konstruktionen.

Ein Transport und eine Handhabung von Behältern und Vorformlingen unter Verwendung von Übergaberädern wird beispielsweise in der DE 199 06 438 A1 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Bei den vorgenannten Zweistufenverfahren ist erforderlich, dass die in einem Spritzgussverfahren hergestellten Vorformlinge zum Zwecke ihrer Verwendung in einer Blasmaschine dieser Blasmaschine in geeigneter und in ausreichender Form zugeführt werden. Heutige Blasmaschinen haben Ausstoßleistungen von mehreren 10.000 Behältern pro Stunde und eine entsprechend hohe Anzahl an Vorformlingen muss daher den Blasmaschinen zuverlässig und störungsfrei zugeführt werden. Zu diesem Zwecke ist einer Blasmaschine in der Regel eine sogenannte Vereinzelungs- und Sortiervorrichtung für Vorformlinge vorgeschaltet. Solche Vereinzelungs- und Sortiervorrichtungen bestehen zum Beispiel aus einem Rollensortierer und einer nachgeschalteten Ablaufschiene, die im Eingangsbereich der Blasmaschine mündet. Dieser Vereinzelungs- und Sortiervorrichtung für Vorformlinge wiederum vorgeschaltet ist zum Beispiel ein Steigförderer, der aus einer Speichervorrichtung für Vorformlinge für den Blasformungsprozess benötigte Vorformlinge in ausreichender Zahl der Vereinzelungs- und Sortiervorrichtungen zuführt. Um eine unterbrechungsfreie Zuführung von Vorformlingen zu gewährleisten wird ein Vorformlingsvorrat in einem Vorratsbehälter dieser Speichervorrichtung für Vorformlinge bereitgestellt, aus der Vorformlinge der Vereinzelungs- und Sortiervorrichtung zugeführt werden. Dieser Vorratsbehälter der Speichervorrichtung wird regelmäßig mit Vorformlingen aufgefüllt, z.B. wenn ein bestimmter Mindestfüllstand unterschritten wird. Dabei liegen die Vorformlinge in der Regel in größeren Gebinden vor beziehungsweise in Transporteinheiten und werden aus diesen Transporteinheiten in den Vorratsbehälter der Speichervorrichtung entleert. Diese Vorratsbehälter werden auch als Silo bezeichnet. Beide Begriffe werden hier synonym verwendet.

Die DE 203 08 513 U1 beschreibt eine Speichervorrichtung der vorgenannten Art. Diese Speichervorrichtung weist einen bodennah aufgestellten Silo auf zur ungeordneten Aufnahme einer Vielzahl von Vorformlingen. Diese Vorformlinge werden von oben in den Silo hineingeschüttet. Aus den Zeichnungen der DE 203 08 513 U1 ist zu erkennen, dass dazu eine Hub-Kipp-Vorrichtung vorgesehen ist, in die mit Vorformlingen gefüllte Kisten eingesetzt werden. Die Hub-Kipp-Vorrichtung hebt die Kisten an und kippt den Inhalt der Kisten in den nach oben offenen Silo hinein.

Einen ähnlichen Stand der Technik beschreibt auch die WO 2012/126129 A1. Die dort offenbarte Speichervorrichtung für Vorformlinge weist einen Silo auf, der nach oben mit einem Deckel verschlossen ist. Die Speichervorrichtung weist weiterhin eine Hub-Kipp-Vorrichtung auf, wobei der Deckel des Silos bewegungsgekoppelt mit der Hub-Kipp-Vorrichtung ausgeführt ist in der Weise, dass die Hub- und Kippbewegung der Hub-Kipp-Vorrichtung durch eine mechanische Bewegungskopplung in eine Öffnungsbewegung des Silodeckels transformiert wird. Nach erfolgter Entleerung der von der Hub-Kipp-Vorrichtung aufgenommenen Transportbehälter mit darin befindlichen Vorformlingen wird während der Rückkehrbewegung aus der Entleerungsposition in die Transportbehälteraufnahmeposition der Silodeckel bewegungsgekoppelt mit der Bewegung der Hub-Kipp-Vorrichtung geschlossen.

Es wird bei diesem Stand der Technik als nachteilig angesehen, dass die Vorformlinge aus relativ großer Höhe in einen Vorratsbehälter für Vorformlinge, also in den vorgenannten Silo, eingefüllt werden. Dies ist aus Gründen der Lärmbelästigung nachteilig und dies ist wenig schonend für die Vorformlinge, die aus diesem Grunde zum Beispiel kleinere Beschädigungen erleiden können. Solche Beschädigungen an den Vorformlingen sind unerwünscht, denn sie finden sich auch an den daraus geblasenen Behältern.

Die Aufgabe der vorliegenden Erfindung besteht darin, diese genannten Nachteile zu beseitigen. Es sollen Verfahren und Vorrichtungen bereitgestellt werden, mit der die Lärmbelästigung reduzierbar ist und mit der die Vorformlinge schonender behandelt werden.

Diese Aufgabe wird gelöst durch ein Verfahren, bei dem eine verfahrbare Rutsche eingesetzt wird. Vor dem Entleeren des Inhalts der Transporteinheit wird eine solche verfahrbare Rutsche derart positioniert, dass die Vorformlinge aus der Transporteinheit auf einen höher gelegenen Bereich der Rutsche entleert werden, in einer Rutschrichtung auf der Rutsche rutschen und dann von einem tiefer gelegenen Rutschenende der Rutsche in den Vorratsbehälter fallen. Es wird als bevorzugt angesehen, dass die Rutsche während des Entleerens der Transporteinheit verfahren wird, wobei hier insbesondere daran gedacht ist, die Rutsche in ihrem Neigungswinkel und/oder in Rutschrichtung und/oder in der Höhe zu verfahren. Es wird als besonders bevorzugt angesehen, dass dieses Verfahren der Rutsche so erfolgt, dass das Rutschenende im Wesentlichen auf gleicher Höhe bleibt. Dazu kann z.B. vorgesehen sein, dass die Rutsche in Rutschrichtung zurückgezogen und gleichzeitig in der Höhe abgesenkt wird.

Diese Aufgabe wird auch gelöst durch eine Speichervorrichtung für Vorformlinge, die eine verfahrbare Rutsche aufweist. Diese Rutsche ist gegenüber einer horizontalen Ebene um einen Neigungswinkel geneigt. Dadurch können Vorformlinge entlang der Rutsche gleiten, nämlich von einem höhergelegenen oberen Rutschenbereich zu einem tiefergelegenen unteren Rutschenende hin. Auf den oberen Rutschenbereich entleerte Vorformlinge bewegen sich entlang dieser Rutsche in einer Rutschrichtung. Weiterhin ist erfindungsgemäß vorgesehen, dass die Rutsche derart angeordnet und ausgerichtet ist, dass die Entleerung der in den Vorratsbehälter einzufüllenden Vorformlinge aus der Transporteinheit auf den oberen Bereich der Rutsche erfolgt. Die dort auf die Rutsche gelangenden Vorformlinge gleiten dann in Rutschrichtung entlang der Rutsche und überwinden zumindest einen Teil des Höhenunterschiedes zwischen der Entleerungshöhe und dem Füllstand im Vorratsbehälter rutschend und nicht wie im Stand der Technik frei fallend. Im Ergebnis gelangen die Vorformlinge bei dem erfindungsgemäßen Verfahren und bei der erfindungsgemäßen Vorrichtung schonender in den Vorratsbehälter und auch die Lärmentstehung wird reduziert.

Weitere vorteilhafte Verfahrens- und Vorrichtungsausgestaltungen der Erfindung sind Gegenstand der Unteransprüche oder ergeben sich aus vorteilhaften Weiterbildungen, die in der Figurenbeschreibung angegeben sind.

Ein großer Vorteil der vorliegenden Erfindung ist die Verfahrbarkeit der Rutsche. Diese kann zum Beispiel dadurch realisiert sein, dass die Rutsche in ihrem Neigungswinkel verstellbar ausgeführt ist. Es ist auch möglich, dass die Rutsche in Rutschrichtung verfahrbar ausgeführt ist. Weiterhin ist möglich, dass die Rutsche höhenverstellbar ausgeführt ist. Diese drei genannten Verfahrbarkeiten sind nicht im Sinne von Alternativen gemeint, sondern eine erfindungsgemäße Rutsche kann auch in ihrem Neigungswinkel und/oder in Rutschrichtung und/oder höhenverstellend verfahrbar ausgeführt sein. Jede Kombination dieser Verfahrbarkeiten ist möglich und hat spezifische Vorteile. Aufgrund der Verfahrbarkeit der Rutsche ist es z.B. möglich, die Rutsche an den Füllstand im Vorratsbehälter anzupassen. Es kann zum Beispiel durch Veränderung des Neigungswinkels ein größerer Höhenunterschied zwischen der Entleerungshöhe und dem Füllstand im Vorratsbehälter überbrückt werden. Der Neigungswinkel kann zum Beispiel auch verringert werden, wenn der Vorratsbehälter bereits teilweise aufgefüllt ist und insofern nur ein geringerer Höhenunterschied zu überwinden ist.

Weiterhin ist mit Vorteil möglich, dass die Rutsche in Rutschrichtung verfahrbar ausgeführt ist. Auf diese Weise verändert sich die Lage des Rutschenendes und somit auch der Ort, an dem die Vorformlinge in den Vorratsbehälter abgelegt werden. Anders als im Stand der Technik wird also nicht nur ein Vorformlingshaufen im Vorratsbehälter erzeugt, sondern aufgrund eines Verfahrens der Rutsche während der Befüllung erfolgt ein Ablegen der Vorformlinge verteilt über eine Verfahrstrecke der Rutsche. Das Ablegen der Vorformlinge über die Rutsche kann so zum Beispiel in Form einer Schicht erfolgen. Hierzu ist es zum Beispiel möglich, die Entleerung der Transporteinheit zeitlich koordiniert mit einem Verfahren der Rutsche auszuführen. Es ergibt sich hierdurch zum Beispiel der Vorteil, dass der Vorratsbehälter unter besserer Ausnutzung des vorhandenen Vorratsbehältervolumens befüllt wird, denn die Vorformlinge werden nicht auf einem Haufen aufgehäuft, sondern in einer Ebene verteilt. Auf diese Weise wird das Vorratsbehältervolumen effektiver ausgenutzt und ein Befüllen des Vorratsbehälters kann in größeren Zeitabständen erfolgen.

Grundsätzlich könnte die vorstehend beschriebene Rutsche zum Beispiel am Vorratsbehälter angeordnet sein. Die Rutsche könnte auch als separate Baueinheit immer nur im Bedarfsfall in eine Gebrauchsstellung gebracht werden, im Übrigen aber in einer Ruheposition abseits des Vorratsbehälters stehen. Es erweist sich aber als vorteilhaft, die Rutsche an der Hub-Kipp-Vorrichtung anzuordnen. Es ist dadurch insbesondere in einfacher Weise möglich, die Rutsche nur im Bedarfsfall, nämlich zum Zwecke der Befüllung mit Vorformlingen, in den Vorratsbehälter eintauchen zu lassen, während der Vorratsbehälter in der übrigen Zeit z.B. verschlossen sein kann. Es liegen aufgrund dieser als bevorzugt angesehenen Anordnung auch einfach zu koordinierende Bewegungen vor, da die Rutsche z.B. den Bewegungen der Hub-Kipp-Vorrichtung zumindest teilweise folgen kann. Als weiterer Vorteil wird angesehen, dass ein Nachrüsten bestehender Vorratsbehälter nicht erforderlich ist.

Die Anordnung der Rutsche an der Hub-Kipp-Vorrichtung hat auch den Vorteil, dass die Rutsche bereits dadurch verfahrbar ist, dass die Hub-Kipp-Vorrichtung verfahrbar ausgeführt ist. Ein weiterer Vorteil ist, dass eine Ausrichtung der Rutsche dadurch vereinfacht ist, dass sie an der Hub-Kipp-Vorrichtung angeordnet ist, mit der sie zusammenarbeitet, da die Entleerung der Vorformlinge in den Vorratsbehälter über die Rutsche erfolgen soll.

Grundsätzlich ist der Verfahrbarkeit der Rutsche als Verfahrbarkeit relativ zur Hub-Kipp-Vorrichtung bzw. relativ zur in der Hub-Kipp-Vorrichtung angeordneten Transporteinheit mit Vorformlingen zu verstehen und auszuführen. Wenn die vorstehend beschriebene Rutsche zum Beispiel am Vorratsbehälter angeordnet ist wäre sie relativ zu diesem Vorratsbehälter verfahrbar auszuführen. Ist die Rutsche an der Hub-Kipp-Vorrichtung angeordnet wäre z.B. eine relative Verfahrbarkeit zur Hub-Kipp-Vorrichtung vorzusehen. Die Anordnung der Rutsche an der Hub-Kipp-Vorrichtung hat den besonderen Vorteil, dass die Rutsche bereits durch diese Anordnung einen ersten Grad der Verfahrbarkeit in dem Maße aufweist, in dem die Hub-Kipp-Vorrichtung verfahrbar ausgeführt ist. Es ist dann nur noch eine zusätzliche Verfahrbarkeit relativ zur Hub-Kipp-Vorrichtung vorzusehen.

Es wird mit Vorteil vorgeschlagen, dass die Rutsche aus einer Gebrauchsstellung in eine Ruhestellung verfahrbar ist. Dabei meint der Begriff der Gebrauchsstellung diejenige Positionierung, bei der die Vorformlinge beim Entleeren der Transporteinheiten auf die Rutsche gelangen, während der Begriff der Ruhestellung eine Positionierung meint, in der der Vorratsbehälter verschließbar ist, weil die Rutsche nicht mehr in den Vorratsbehälterinnenraum hineinragt. Dies hat den Vorzug, dass die Rutsche immer dann, wenn Sie nicht benötigt wird, in eine platzsparende und ein Verschließen des Vorratsbehälters nicht störende Ruhestellung verfahren werden kann. Die Gebrauchsstellung ist dabei z.B. dadurch ausgezeichnet, dass die Rutsche so angeordnet und ausgerichtet ist, dass Vorformlinge auf einen oberen Rutschenbereich auf die Rutsche entleert werden können. Die Ruhestellung ist z.B. dadurch ausgezeichnet, dass eine solche Entleerung auf die Rutsche nicht mehr erfolgen kann. Diese Ruhestellung ist insbesondere dadurch gekennzeichnet, dass die Rutsche außerhalb des Vorratsbehälters angeordnet ist, der deshalb zum Beispiel vollständig geschlossen werden kann.

Der Vorratsbehälter der Speichervorrichtung weist bevorzugt eine verfahrbare Abdeckung auf. Die Abdeckung muss nicht vollständig verfahren werden bzw. vollständig verfahrbar sein. Es ist ausreichend, wenn die Abdeckung zumindest bereichsweise öffnet und schließt. Sie kann z.B. aus einem feststehenden Abdeckelement und einem verfahrbaren Abdeckelement bestehen. Die Abdeckung kann z.B. benutzergesteuert verfahren werden, um für eine Befüllung Zugang zum Vorratsbehälterinneren zu gewähren. Es ist auch eine automatisierte und mit der Bewegung der Hub-Kipp-Vorrichtung koordinierte Verfahrbarkeit möglich. Eine solche Verfahrbarkeit und eine solche Koordinierung kann zum Beispiel durch eine Steuerungseinrichtung erfolgen, die die Bewegungen der Hub-Kipp-Vorrichtung steuert und zeitlich koordiniert dazu auch die Öffnungs- und Schließbewegung der Abdeckung steuert. Es ist denkbar, dass die Abdeckung für die Verfahrbarkeit über einen eigenen Antrieb verfügt. Es ist aber auch denkbar, dass eine mechanische Bewegungskopplung zwischen der Bewegung der Hub-Kipp-Vorrichtung und dem Öffnen und Schließen der Abdeckung vorgesehen ist.

Bezüglich der sich öffnenden und verschließenden Abdeckung ist von Vorteil, dass diese sich in der Entleerungsstellung der Hub-Kipp-Vorrichtung an dieser Vorrichtung anlegt, damit zusammen mit der Hub-Kipp-Vorrichtung ein geschlossener, schallisolierender Raum ausgebildet ist. Auf diese Weise lässt sich die Lärmbelästigung niedrig halten. Dies wird dadurch unterstützt, dass die verfahrbare Abdeckung mit elastischen Dichtelementen versehen ist, z.B. mit Gummidichtungen, die an der Hub-Kipp-Vorrichtung zur Anlage kommen. Dies hat die vorteilhafte Wirkung eines Schließens eines dazwischenliegenden Spaltes und vermeidet Beschädigung an der Abdeckung und/oder an der Hub-Kipp-Vorrichtung, wenn diese aneinander zur Anlage kommen. Auch hier ist insbesondere daran gedacht, auch dieses Anlegen der Abdeckung an die Hub-Kipp-Vorrichtung automatisiert auszuführen.

Die Zugänglichkeit des Vorratsbehälters lässt sich mit Vorteil dadurch verbessern, dass eine der Hub-Kipp-Vorrichtung zugewandte Wand des Vorratsbehälters zumindest bereichsweise verfahrbar ausgeführt ist. Zudem kann dadurch die Entleerungshöhe reduziert werden. Beides trägt zu einer Reduzierung des entstehenden Lärms und zu einem schonenderen Einfüllen der Vorformlinge in den Vorratsbehälter bei.

Eine solche Verfahrbarkeit der Wand ist zum Beispiel erreichbar durch das Vorsehen einer in vertikaler Richtung verschieblichen Wand. Der verfahrbare Wandbereich könnte aber zum Beispiel auch als schwenkbarer Wandbereich ausgebildet sein. Die Verfahrbarkeit soll dazu führen, dass die Oberkante des Wandbereiches, der von der Hub-Kipp-Vorrichtung in Entleerungsstellung überragt werden muss, auf einem geringeren Höhenniveau liegt.

Es ist dabei bevorzugt, dass der verfahrbare Wandbereich in der Entleerungsstellung der Hub-Kipp-Vorrichtung an dieser Hub-Kipp-Vorrichtung oder an der Rutsche anliegt. Auf diese Weise wird ein geschlossener Raum geschaffen, der den entstehenden Lärm einkapselt. Auch hier erweist es sich als vorteilhaft, wenn der verfahrbare Wandbereich mit elastischen Dichtelementen versehen ist, z.B. mit Gummidichtungen, die an der Hub-Kipp-Vorrichtung und/oder der Rutsche zur Anlage kommen. Dies hilft beim Schließen von Spalten und vermeidet Beschädigungen, wenn der verfahrbare Wandbereich und die Hub-Kipp-Vorrichtung und/oder die Rutsche zur Anlage aneinander kommen.

Sowohl die verfahrbare Abdeckung des Vorratsbehälters als auch die verfahrbare Wand des Vorratsbehälters können zum Beispiel so ausgebildet sein, dass bei der Bewegung der Hub-Kipp-Vorrichtung in die Entleerungsstellung die Abdeckung und/oder die Wand durch die Hub-Kipp-Vorrichtung verschoben werden, wenn diese an die verfahrbaren Bereiche anstößt. Es ist auch möglich, die beiden genannten verfahrbaren Elemente beide oder einzeln mit einem eigenen Antrieb zu versehen. Es kann dabei vorgesehen werden, dass der Deckel und/oder die verfahrbare Wand aus einer Geschlossenstellung in eine erste Offenstellung verfahren werden. Sobald die Hub-Kipp-Vorrichtung und/oder die Rutsche die Entleerungsstellung erreicht hat bzw. erreicht haben, können dann der verfahrbare Deckel und/oder die verfahrbare Wand in Richtung Geschlossenstellung verfahren werden, bis ein Anlegen an der Hub-Kipp-Vorrichtung und/oder an der Rutsche erfolgt.

Eine weitere Verbesserung der Lärmunterdrückung ist z.B. dadurch möglich, dass z.B. außenseitig an der Hub-Kipp-Vorrichtung und an inneren Wandbereichen des Vorratsbehälters zusammenwirkende Lamellenelemente vorgesehen sind, die bei der Bewegung der Hub-Kipp-Vorrichtung in die Entleerungsstellung ineinander greifen. Es kann sich dabei z.B. jeweils um Lamellenpaare mit im Wesentlichen in vertikaler Richtung verlaufender Erstreckung handeln, z.B. aus einem elastischen Material. In den Zwischenbereich des Lamellenpaares der Hub-Kipp-Vorrichtung kann sich z.B. eine Lamelle des Vorratsbehälters während dessen Bewegung in die Entleerungsstellung hineinschieben.

Die erfindungsgemäße Rutsche kann mit Vorteil zum Beispiel in Abhängigkeit vom Vorratsbehälterfüllstand verfahren werden. Es kann zum Beispiel die Speichervorrichtung eine Steuerungseinrichtung aufweisen. Weiterhin kann die Speichervorrichtung dazu eine Sensoreinrichtung aufweisen, die zur Erfassung des Vorratsbehältersfüllstandes ausgebildet ist. Solche Sensoreinrichtungen sind im Stand der Technik grundsätzlich bekannt, zum Beispiel um ein Warnsignal auszugeben, wenn ein bestimmter Mindestfüllstand erreicht ist. Vorliegend sollte diese Sensoreinrichtung bevorzugt nicht nur einen Mindestbehälterfüllstand erfassen können, sondern zumindest stufenweise eine oder mehrere weitere Füllstände ermitteln können. Bevorzugt ist die Steuerungseinrichtung dann dazu ausgebildet, die Rutsche abhängig von den von der Sensoreinrichtung erfassten Füllstandsdaten zu verfahren. Zum Beispiel ist daran gedacht, dass das untere Rutschenende in einem geringen Abstand oberhalb des erfassten Füllstandes gehalten wird. Bei einem niedrigen Füllstand würde die Rutsche also so verfahren werden, dass das Rutschenende tiefer liegt als bei einem relativ hohen Füllstand im Vorratsbehälter. Dies könnte zum Beispiel dadurch erfolgen, dass die Neigung der Rutsche verändert wird und/oder dadurch, dass die Rutsche in Rutschrichtung verschoben wird und/oder dadurch, dass die Rutsche insgesamt in ihrer Höhe verschoben wird. Insbesondere wenn die Rutsche sowohl in ihrer Neigungsrichtung als auch in Rutschrichtung verfahrbar ist, kann die Steuerungseinrichtung zum Beispiel dazu ausgebildet sein, das untere Rutschenende im Laufe des Entleerungsvorganges einer Vorformlingstransporteinheit bei etwa gleichbleibender Höhenlage innerhalb des Vorratsbehälters zu bewegen. Während der Entleerung der mit Vorformlingen gefüllten Transporteinheit kann zum Beispiel die Rutsche entgegengesetzt zur Rutschrichtung der Vorformlinge verschoben werden und gleichzeitig in der Höhe abgesenkt werden, damit das Rutschenende auf einem gleichen Höhenniveau verbleit. Die Vorformlinge werden dadurch schonend und schichtweise in dem Vorratsbehälter abgelegt.

Mit Vorteil weist die Hub-Kipp-Vorrichtung ein die Transporteinheiten aufnehmendes Lastaufnahmemittel auf, das einen Boden, Seitenwände sowie einen Deckel aufweist. Für die Bestückung mit einer Transporteinheit und für die Entnahme einer Transporteinheit nach deren Entleerung ist das Lastaufnahmemittel mit einer verschließbaren Zugangstür versehen. Das Lastaufnahmemittel weist weiterhin für die Entleerung der darin aufgenommenen Transporteinheit eine Entleerungsöffnung auf. Mit Vorteil ist diese Entleerungsöffnung mit einem verfahrbaren Deckel verschlossen, wobei der Deckel nicht insgesamt verfahrbar ausgeführt sein muss, er kann z.B. auch aus einem feststehenden Deckelelement und einem verfahrbaren Deckelelement bestehen. Auf diese Weise kann die Transporteinheit in dem Lastaufnahmemittel aufgenommen sein und in eine Entleerungsstellung verfahren werden. Ein Entleeren der Transporteinheit erfolgt allerdings erst, wenn das die Entleerungsöffnung verschließende Deckelelement z.B. automatisiert oder benutzerausgelöst in eine Öffnungsstellung verfahren wird. Auf diese Weise besteht ein hoher Grad der Kontrolle über den Entleerungsvorgang und der Entleerungsvorgang kann zum Beispiel so ausgestaltet sein, dass ein Öffnen des verfahrbaren Deckels erst erfolgt, wenn die Hub-Kipp-Vorrichtung seine endgültige Entleerungsposition erreicht hat. Insbesondere kann ein Öffnen des Deckels z.B. erst dann initiiert werden, wenn zum Beispiel die verfahrbare Abdeckung des Vorratsbehälters und/oder die verfahrbare Wand des Vorratsbehälters schalldämmend an der Hub-Kipp-Vorrichtung bzw. an der Rutsche anliegen.

Mit Vorteil wird vorgeschlagen, dass das Lastaufnahmemittel eine Hubeinrichtung aufweist zum Anheben der Transporteinheit bis zur Anlage gegen den geschlossenen Deckel des Lastaufnahmemittels. Es sind im Stand der Technik Transporteinheiten unterschiedlicher Größe bekannt. Durch die erfindungsgemäße Hubeinrichtung ist es möglich, unabhängig von den Dimensionen der Transporteinheit diese zunächst gegen den geschlossenen Deckel des Lastaufnahmemittels anzuheben, sodass die Transporteinheit zusammen mit dem geschlossenen Deckel einen geschlossenen Raum bildet. Vorformlinge sind dadurch daran gehindert, bei Ausführen der Hub-Kipp-Bewegung vorzeitig und unkontrolliert aus der Transporteinheit herauszufallen. Zudem ist die Transporteinheit gegen Verrutschen innerhalb des Lastaufnahmemittels gesichert, da es gegen den geschlossenen Deckel des Lastaufnahmemittels angehoben ist.

In der Regel werden die Vorformlinge gebindeweise in einem Plastiksack aufbewahrt, der in eine Transporteinheit unter Öffnung des Sackes eingesetzt wird. Um ein Herausfallen des Sackes im Zuge des Entleerungsvorganges zu vermeiden erweist sich das vorstehend beschriebene Anheben der Transporteinheit gegen den verschlossenen Deckel ebenfalls als vorteilhaft, weil dabei der Plastiksack eingeklemmt wird und nicht in den Vorratsbehälter geraten kann.

Mit Vorteil wird vorgeschlagen, dass der Deckel des Lastaufnahmemittels erst nach oder erst bei Erreichen der Entleerungsstellung der Hub-Kipp-Vorrichtung geöffnet wird. Insbesondere wird als vorteilhaft angesehen, dass dieses Öffnen zunächst in eine erste Öffnungsstellung erfolgt und zeitlich danach ein Öffnen in eine zweite, eine größere Öffnung freigebende Öffnungsstellung erfolgt. Auf diese Weise ist erreichbar, dass die Menge an Vorformlingen, die die Öffnung in Richtung auf die Rutsche verlassen, dosiert ist. Zu Beginn des Entleerungsvorganges, das heißt beim Öffnen des Deckels, ist die in Richtung der Rutsche fallende Zahl an Vorformlingen tendenziell höher als zu einem späteren Zeitpunkt des Entleerungsvorganges. Dem wird zumindest teilweise entgegengewirkt, indem zunächst der Deckel eine kleinere Öffnung freigibt und erst später eine größere Öffnung freigibt.

Ein hoher Automatisierungsgrad wird dadurch unterstützt, dass die vorstehend geschilderten verfahrenden Bewegungen der Rutsche und/oder der Abdeckung und/oder der verfahrbaren Wand und/oder der Hubeinrichtung und/oder des Deckels teilweise oder vollständig automatisiert von einer Steuereinrichtung der Speichervorrichtung gesteuert ausgeführt werden. Z.B. kann die Rutsche automatisiert in die Gebrauchsstellung verfahrend ausgebildet sein. Dies umfasst z.B. die Möglichkeit, dass das Verfahren der Rutsche in die Gebrauchsstellung erst erfolgt, wenn die Hub-Kipp-Vorrichtung die Entleerungsstellung erreicht hat. Dies erfasst aber auch die Möglichkeit, dass während der Bewegung der Hub-Kipp-Vorrichtung in die Entleerungsstellung auch die Rutsche in die Gebrauchsstellung relativ zur Hub-Kipp-Vorrichtung bzw. relativ zum Transportbehälter verfahren wird. Letzteres bringt einen Zeitvorteil, da beide Bewegungen zeitgleich ausgeführt werden.

Weiterhin ist bevorzug vorgesehen, dass während der Entleerung der Transporteinheit die Rutsche in Rutschrichtung oder entgegen der Rutschrichtung verfahren wird und/oder in seiner Neigung verfahren wird. Weiterhin bevorzugt erfolgt dies in der Weise, dass das Rutschenende im Wesentlichen auf gleicher Höhe bleibt. Wie bereits zuvor beschrieben, kann dadurch das Entleeren der Vorformlinge in den Vorratsbehälter schichtweise erfolgen und es wird die Bildung eines Vorformlingshaufens verhindert. Insgesamt kann dadurch der im Vorratsbehälter vorhandene Raum effektiver nutzend befüllt werden.

Auch bei den übrigen vorstehend beschriebenen verfahrenden Bewegungen erscheint es für einen hohen Automatisierungsgrad vorteilhaft, wenn die Steuereinrichtung die entsprechenden Bewegungen initiiert und/oder steuert. Es ist aber auch möglich, einzelne dieser Bewegungen oder alle 1 benutzerinitiiert auszuführen.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine Vereinzelungs- und Sortiervorrichtung für Vorformlinge,
- Fig. 5a - 5i: eine Speichervorrichtung für Vorformlinge mit einem Vorratsbehälter für Vorformlinge und mit einer Hub-Kipp-Vorrichtung in verschiedenen Stadien eines Befüllungsvorganges.

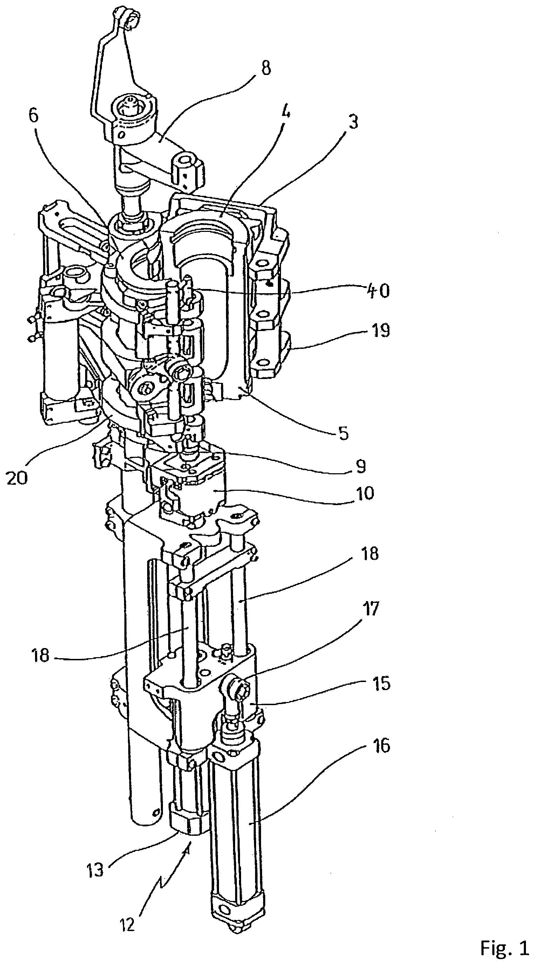

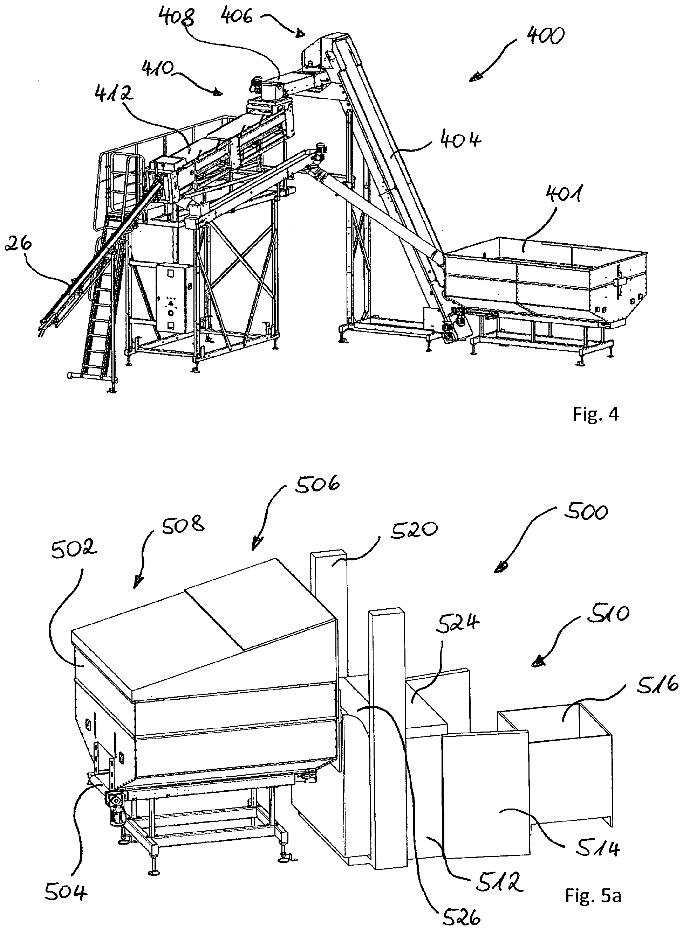

Die Erläuterungen zu den Figuren 1 - 3 dienen der Einbettung der vorliegenden Erfindung in einen technischen Gesamtkontext. Einzelheiten und Ausführungsbeispiele für technische Ausgestaltungen der Erfindung werden in Verbindung mit den Figuren 4 und 5a bis 5i näher beschrieben.

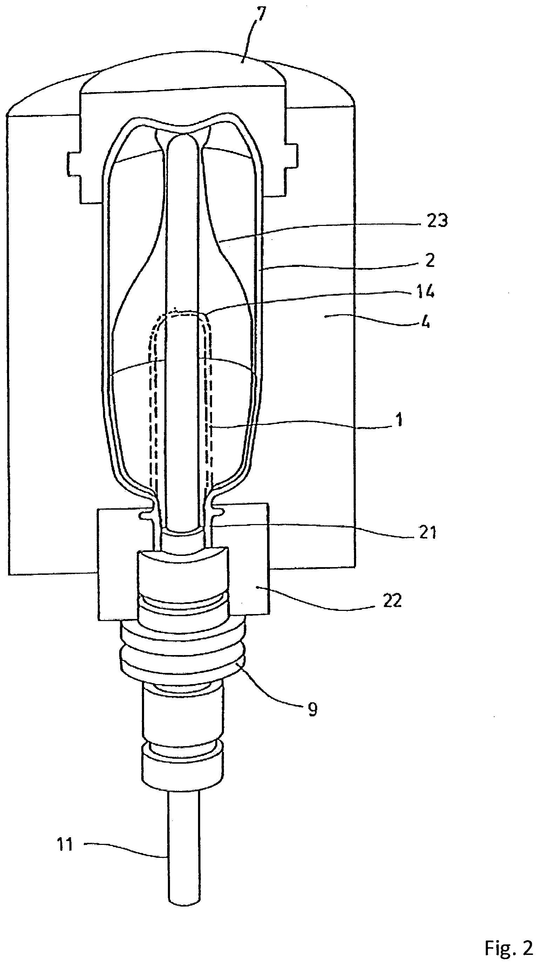

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Halteelement (9) fixiert sein. Dieses Halteelement (9) kann z.B. erfindungsgemäß oder wie im Stand der Technik bekannt ausgebildet sein. Es ist beispielsweise möglich, den Vorformling (1) über Zangen oder andere Handhabungsmittel direkt in die Blasform (4) einzusetzen. Zur Ermöglichung einer Druckluftzuleitung ist unterhalb der Blasform (4) ein Anschlusskolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn mehrere Blasstationen (3) auf einem rotierenden Blasrad (25) angeordnet sind.

Bei der in Fig. 1 dargestellten Ausführungsform ist das Recksystem derart ausgebildet, dass eine Tandemanordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40). Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

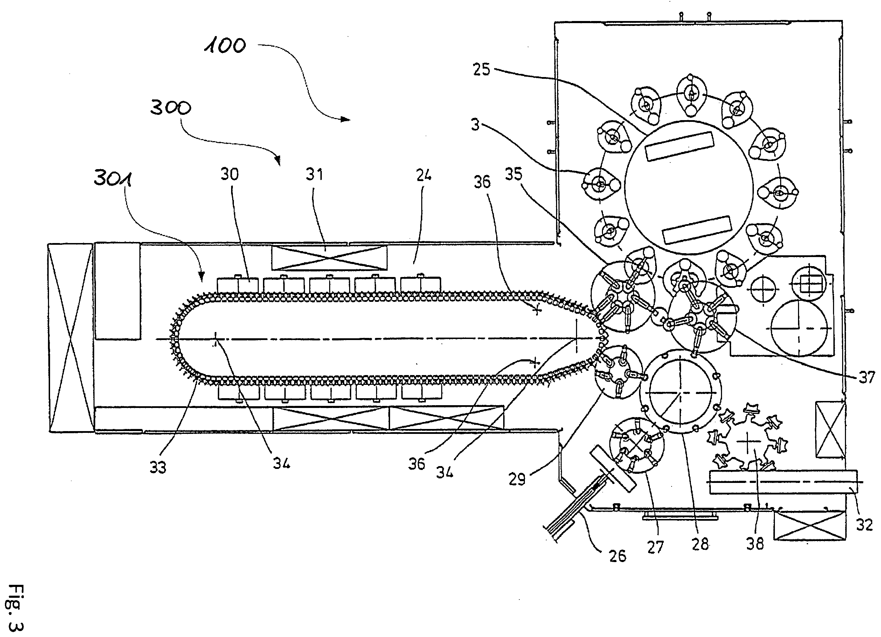

Fig. 3 zeigt den grundsätzlichen Aufbau einer Blasmaschine (100), die mit einer Aufheizvorrichtung (300) mit einer Heizstrecke (24) sowie mit einem rotierenden Blasrad (25) versehen ist. Ausgehend von einer Vorformlingseingabe, die ohne Beschränkung der Allgemeinheit hier als Gleitschiene (26) ausgebildet ist, werden die Vorformlinge (1) von Übergaberädern (27, 28, 29) in den Bereich der Heizstrecke (24) transportiert. Entlang der Heizstrecke (24) sind Heizstrahler (30) als Heizeinrichtungen sowie Gebläse (31) angeordnet, um die Vorformlinge (1) zu temperieren. Nach einer ausreichenden Temperierung der Vorformlinge (1) werden diese von einem Übergaberad (35) an das Blasrad (25) übergeben, in dessen Bereich die Blasstationen (3) angeordnet sind. Die fertig geblasenen Behälter (2) werden von weiteren Übergaberädern (37, 28, 38) einer Ausgabestrecke (32) zugeführt. Das Übergaberad (37) ist dabei als ein Entnahmerad und das Übergaberad (38) als ein Ausgaberad ausgebildet.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) Teil des Transportweges der Vorformlinge (1) ist. Der Transport der Vorformlinge (1) erfolgt in der Aufheizvorrichtung (300) mittels einer Vielzahl umlaufender Transportelemente (33), die kettenartig aneinandergereiht und entlang von Umlenkrädern (34, 36) geführt sind. Die umlaufenden Transportelemente (33) bewegen sich also entlang einer Kettenbahn (301), die auch die Transportbahn der Vorformlinge bildet, da die Vorformlinge (1) entlang der Kettenbahn (301) geführt sind. Insbesondere ist daran gedacht, durch die kettenartige Anordnung der Transportelemente (33) eine im Wesentlichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung des Transportweges (301) drei Umlenkräder (34, 36) positioniert sind, und zwar jeweils die kleineren Umlenkräder (36) im Bereich der Überleitung zu den linearen Verläufen des Transportweges (301) und das größere Umlenkrad (34) im unmittelbaren Übergabebereich zum Übergaberad (27) und zum Blasrad (25). Alternativ zur Verwendung von kettenartigen Transportelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

Ein Transport der Vorformlinge (1) und der Behälter (2) durch die Blasmaschine (100) kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling den gesamten Bereich der Blasmaschine (100) ohne Durchführung von Wendevorgängen mit seiner Mündung in lotrechter Richtung nach oben orientiert.

Fig. 4 zeigt eine Vereinzelungs- und Sortiervorrichtung (400) für Vorformlinge, die einer wie vorstehend beschriebenen Blasmaschine (100) vorgeschaltet sein kann, und die dieser Blasmaschine (100) in geordneter und kontinuierlicher Weise Vorformlinge (1) zuführt. Im rechten Teil der Fig. 4 ist ein Vorratsbehälter (401) für Vorformlinge gezeigt als Teil einer Speichervorrichtung (500) für Vorformlinge. Dieser Vorratsbehälter (401), der auch als Silo bezeichnet wird, bevorratet Vorformlinge, die in der Vereinzelungs- und Sortiervorrichtung (400) vereinzelt und sortiert werden sollen, um dann nachfolgend über die Ablaufschiene (26) zur Blasmaschiene (100) bewegt zu werden. Dazu befindet sich bodenseitig des Silos (401) ein Vorformlingsauslass, durch den Vorformlinge in einen Steigförderer (404) gelangen, der die Vorformlinge höhenbewegt zu einem Eingabeende (406) einer Fördereinrichtung (408). Am Abgabeende (410) der Fördereinrichtung (408) fallen die Vorformlinge in eine Sortiereinrichtung (412), die zum Beispiel als üblicher Rollensortierer ausgebildet sein kann. In der Sortiereinrichtung (412) werden die Vorformlinge ausgerichtet und sortiert und bewegen sich entlang der Ablaufschiene (26) in Richtung auf die Blasmaschine (100). Der genannter Steigförderer (404) und die genannte Vereinzelungs- und Sortiervorrichtung (400) sind nicht Teil der Speichervorrichtung.

Die Figuren 5a - 5i zeigen ein Ausführungsbeispiel für eine Speichervorrichtung mit einer Hub-Kipp-Vorrichtung gemäß der vorliegenden Erfindung. Der in diesem Ausführungsbeispiel dargestellte Silo (502) weist ein bodenseitig verlaufendes Förderband (504) auf, das darauf liegende Vorformlinge von einer Befüllungsseite (506) zu einer Abgabeseite (508) befördert. Dieser Abgabeseite (508) könnte sich zum Beispiel ein wie in Fig. 4 gezeigter Steigförderer (404) anschließen. Es sind aber auch andere Konstruktionen für Zuführung zu einer Vereinzelungs- und Sortiervorrichtung für Vorformlinge bekannt, ohne dass die vorliegende Erfindung auf die Verwendung einer bestimmten Vereinzelungs- und Sortiervorrichtung beschränkt wäre.

Das nachfolgend detaillierter beschriebene Ausführungsbeispiel zeigt aus Gründen der leichteren Darstellbarkeit, dass die Hub-Kipp-Vorrichtung der Abgabeseite (508) des Silos gegenüberliegend angeordnet ist. Es ist natürlich auch möglich, dass die Hub-Kipp-Vorrichtung an den Längsseiten des Silos und somit 90° versetzt seitlich zu der Abgabeseite angeordnet wird. Dies kann z.B. aus Stellflächengründen bevorzugt sein.

Befüllseitig (506) des Silos (502) ist eine Hub-Kipp-Vorrichtung (510) angeordnet, die unter anderem aus einem Lastaufnahmemittel (512) besteht. Auf seiner siloabgewandten Seite weist dieses Lastaufnahmemittel (512) Türen (514) auf, um Transporteinheiten (516) in das Lastaufnahmemittel (512) einzuführen oder aus dem Lastaufnahmemittel (512) zu entnehmen. In diesen Transporteinheiten (516) werden gebindeweise Vorformlinge bereitgestellt, um mittels der Hub-Kipp-Vorrichtung (510) in den Silo (502) entleert zu werden.

Das Lastaufnahmemittel (512) ist auf seiner Oberseite durch einen Deckel verschlossen, der gemäß dem vorliegenden Ausführungsbeispiel aus einem feststehenden Deckelelement (524) und einem verfahrbaren Deckelelement (526) besteht. Im Übrigen ist das Lastaufnahmemittel (512) von seitlichen Wänden verschlossen.

Das Lastaufnahmemittel (512) kann entlang von Hubführungen (520) in der Höhe verfahren werden. Einzelheiten zu einem Hubantrieb sind nicht dargestellt, es sind aber im Stand der Technik entsprechende Antriebe bekannt. Weiterhin weist die Hub-Kipp-Vorrichtung einen Kippantrieb auf, der ein Kippen des Lastaufnahmemittels (512) aus der in Fig. 5a gezeigten Belade- bzw. Entladestellung in eine Entleerungsstellung bei Erreichen einer Entleerungshöhe ermöglicht. Auch solche Kippantriebe sind grundsätzlich im Stand der Technik bekannt und weder die spezifische Ausbildung des Hubantriebes noch die spezifische Ausbildung des Kippantriebes sind erfindungswesentlich. Es müssen auch keine getrennten Antriebe für die Hub- und die Kippbewegung vorgesehen werden, ein gemeinsamer Antrieb ist auch möglich.

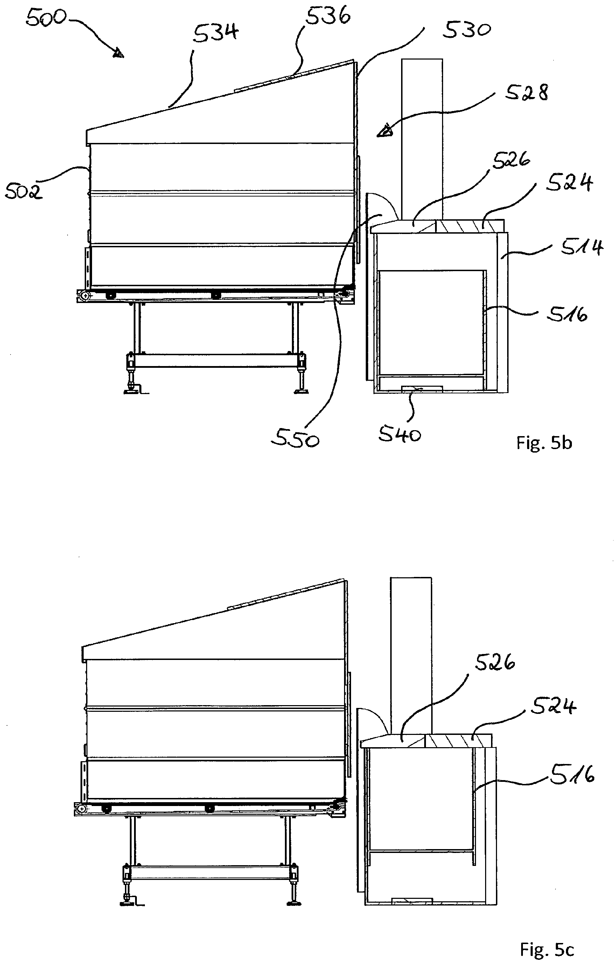

Die Figuren 5b - 5i zeigen in einer Schnittansicht zu der Speichervorrichtung (500) aus Fig. 5a verschiedene eingenommene Positionen der verschiedenen Elemente der Speichervorrichtung (500) im Laufe eines Entleerungsvorganges. Fig. 5a zeigt den Ausgangs- bzw. Endzustand, in dem das Lastaufnahmemittel (512) seine Be- bzw. Entladeposition eingenommen hat. Die Tür (514) ist zum Zwecke des Be- oder Entladens geöffnet. Im dargestellten Ausführungsbeispiel kann das Lastaufnahmemittel eine einzelne Transporteinheit (516) aufnehmen. Es sind auch Konstruktionen möglich, bei denen mehrere Transporteinheiten (516) im Lastaufnahmemittel (512) aufgenommen werden können. Bei den Transporteinheiten (516) kann es sich um beliebige Gebinde handeln, wie sie im Stand der Technik zu Aufbewahrung und zum Transport von Vorformlingen bekannt sind.

Die Schnittansicht der Fig. 5b zeigt die Grundstellung der Speichervorrichtung (500). Der Silo (502) ist allseitig verschlossen, insbesondere ist die Abdeckung (534) geschlossen, die ein verfahrbares Abdeckungselement (536) aufweist. Auch an seinem befüllungsseitigen Ende ist der Silo (502) von einer Wand (528) verschlossen. Diese Wand (528) weist einen verfahrbaren Wandbereich (530) auf.

In der Schnittdarstellung des Lastaufnahmemittels (512) ist erkennbar, dass die Tür (514) geschlossen wurde, ein Transportbehälter (516) befindet sich innerhalb des Lastaufnahmemittels (512). Der verfahrbare Deckelabschnitt (526) wurde in seine Geschlossenstellung verfahren. An der Transporteinheit (516) ist eine bodenseitig angeordnete Hubeinrichtung (540) zu erkennen. Weiterhin befindet sich zwischen dem Lastaufnahmemittel (512) und der rückwärtigen Wand (530) des Silos (502) eine Rutsche (550), die in ihrer Ruhestellung gezeigt ist.

In Abwandlung zu dieser gezeigten Anordnung kann die verfahrbare Rutsche (550) auch am Silo (502) angeordnet werden. Es ist auch möglich die Rutsche (550) als separates Bauteil auszuführen, das also weder am Silo (502) noch an der Hub-Kipp-Vorrichtung (510) angeordnet ist.

Fig. 5c zeigt eine angehobene Transporteinheit (516). Die Hub-Kipp-Vorrichtung (510) hat die Transporteinheit (516) so weit angehoben, dass der obere Rand der Transporteinheit (516) am Deckelelement (524) bzw. (526) anliegt. Die Transporteinheit (516) bildet zusammen mit der Lastmitteldecke (524) bzw. (526) einen abgeschlossenen Raum, der die in der Transporteinheit (516) enthaltenen Vorformlinge umschließt.

Das vorstehend erläuterte Anheben der Transporteinheit (516) innerhalb des Lastaufnahmemittels (512) gegen den Deckel (524, 526) erweist sich als vorteilhaft, aber als optionale Möglichkeit.

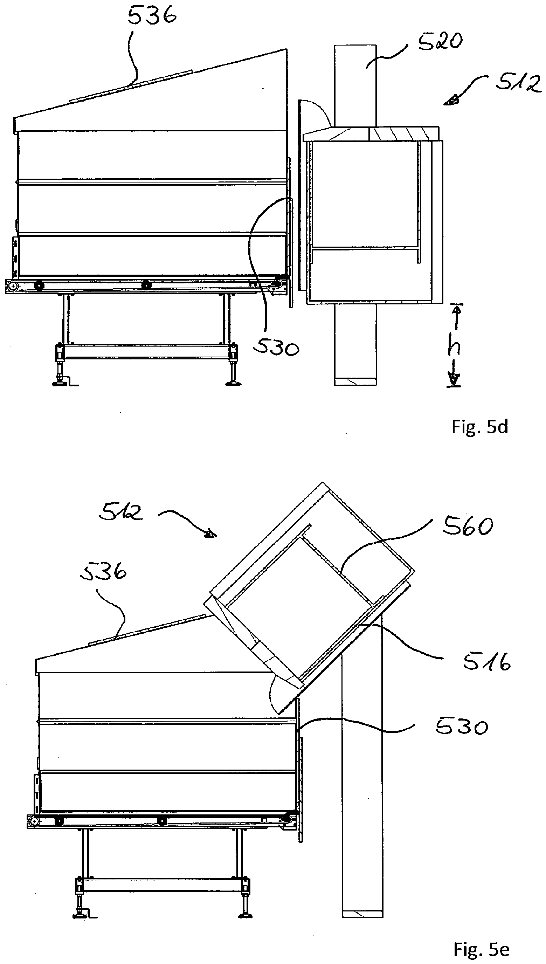

Fig. 5d zeigt, dass das Lastaufnahmemittel (512) um eine Wegstrecke (h) angehoben wurde von der Hub-Kipp-Vorrichtung (510). Gleichzeitig wurde das verfahrbare Abdeckungselement (536) der Siloabdeckung (534) in eine Öffnungsstellung bewegt und das verfahrbare Wandelement (530) der rückwärtigen Wand (528) des Silos ebenfalls in eine Öffnungsstellung bewegt. Diese Bewegung muss nicht zeitgleich mit dem Anheben des Lastaufnahmemittels (512) erfolgen, dies wird aber als vorteilhaft angesehen. Das verfahrbare Abdeckungselement (536) kann über einen eigenen Antrieb verfügen. Auch das verfahrbare Wandelement (530) kann über einen eigenen Antrieb verfügen. Es ist auch möglich, dass diese beiden verfahrbaren Elemente von einem gemeinsamen Antrieb verfahren werden. Genauso ist es möglich, dass eines oder beide der verfahrbaren Elemente des Silos von einem Antrieb der Hub-Kipp-Vorrichtung angetrieben werden oder mechanisch bewegungsgekoppelt sind mit einer Bewegung der Hub-Kipp-Vorrichtung.

Fig. 5e zeigt die Hub-Kipp-Vorrichtung (510) in seiner Entleerungsstellung. Das Lastaufnahmemittel (512) ist in die Entleerungsstellung gekippt und hat seine Entleerungshöhe erreicht. Das offene Ende der Transporteinheit (516) befindet sich nunmehr in einer tieferen Position als der geschlossene Boden (560) der Transporteinheit (516). Entsprechend liegen die nicht dargestellten Vorformlinge innenseitig am Deckel (524, 526) des Lastaufnahmemittels (512) an.

Die Rutsche (550) hat sich relativ zum Lastaufnahmemittel (512) nicht bewegt, sondern hat die Hub- und Kippbewegung des Lastaufnahmemittels (512) mitvollzogen. Weiterhin ist zu beachten, dass das verfahrbare Abdeckungselement (536) des Silos (502) in der dargestellten Entleerungsphase und im dargestellten Ausführungsbeispiel gegen den Deckel (524, 526) des Lastaufnahmemittels (512) anstößt. Ebenso ist in der dargestellten Entleerungsphase und im dargestellten Ausführungsbeispiel der verfahrbare Wandbereich (530) des Silos (512) gegen die Hub-Kipp-Vorrichtung (510) bzw. gegen die Rutsche (550) verfahren. Beides dient der Schallisolierung und beides ist als bevorzugte, aber optionale Ausführungsform zu betrachten.

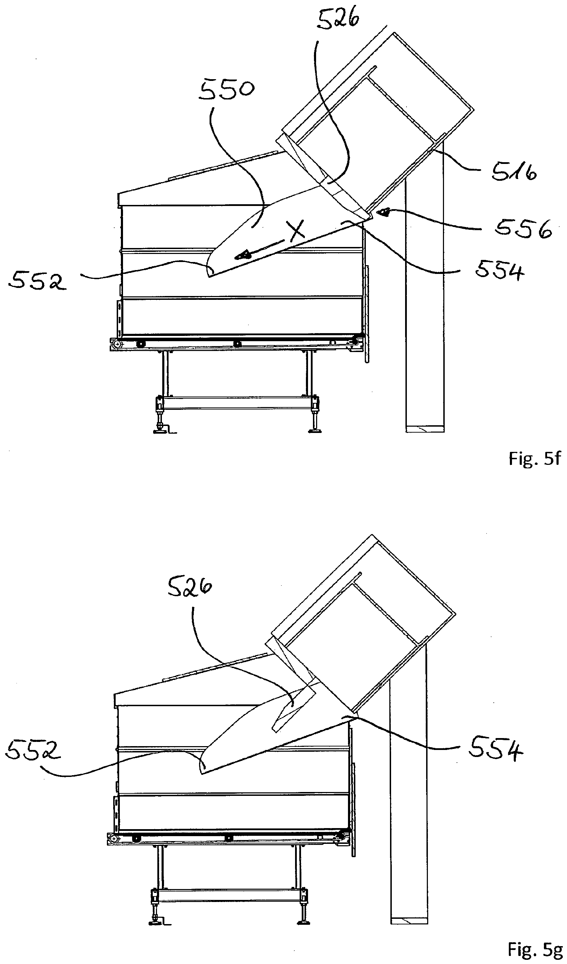

In der Entleerungsphase der Fig. 5f ist die Rutsche (550) in eine Entleerungsposition verfahren worden. Gegenüber der Position in Fig. 5e wurde die Rutsche (550) in Rutschrichtung (X) vorgeschoben und in ihrem Neigungswinkel verändert, nämlich hin zu einem weniger steilen Verlauf. Das freie, tieferliegende Rutschenende (552) soll dabei bevorzugt in einem geringen Höhenabstand oberhalb des Füllstandes in dem Silo (502) angeordnet sein. Der obere Rutschenbereich (554) befindet sich bevorzugt in einem geringen Höhenabstand unterhalb der Entleerungskante (556) des Lastaufnahmemittels (512). Der verfahrbare Deckelabschnitt (526) des Lastaufnahmemittels befindet sich noch immer in der geschlossenen Position.

Fig. 5g zeigt ein nächstes Entleerungsstadium. Nunmehr wurde der verfahrbare Deckelabschnitt (526) in eine Öffnungsstellung verfahren. Dies kann zum Beispiel abgestuft über eine erste Öffnungsstellung und über weitere Öffnungsstellungen erfolgen, die eine größer werdende Auslassöffnung (550) freigeben können. Mit dem Öffnen des verfahrbaren Deckelabschnittes (526) gelangen Vorformlinge aus dem Lastaufnahmemittel (512) bzw. aus der Transporteinheit (516) auf das obere Rutschenende (554), gleiten in Rutschrichtung (X) in Richtung auf das untere Rutschenende (552) und fallen von dort in den Silo (502) hinein auf die darin noch enthaltene Menge an Vorformlingen.

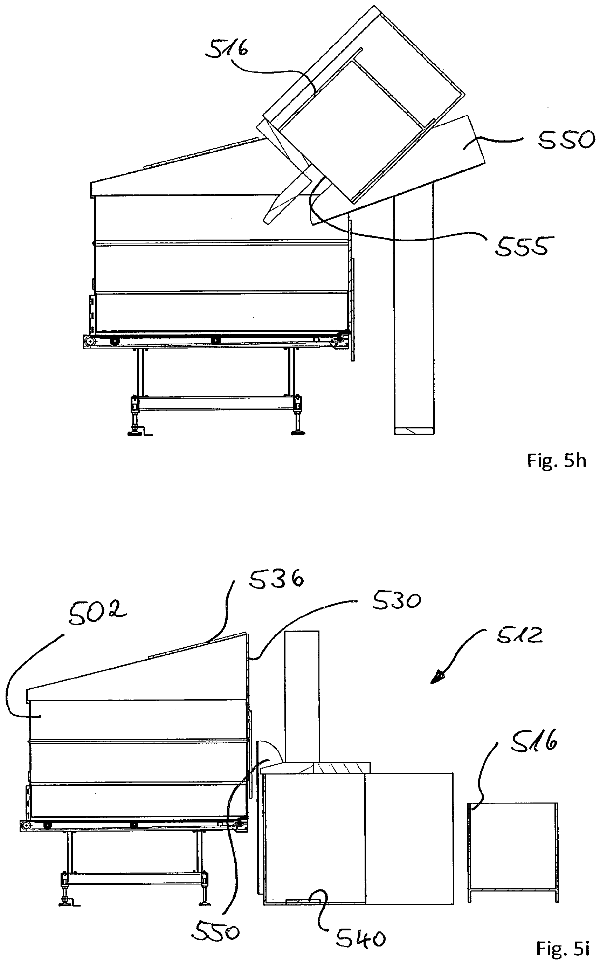

Bevorzugt wird wie aus Fig. 5h ersichtlich, während der Entleerung des Transportbehälters (516) die Rutsche (550) entgegen der Rutschrichtung (X) verschoben. Dies führt im Ergebnis dazu, dass sich das Rutschenende (552) verschiebt und dass die Vorformlinge entsprechend der rückziehenden Bewegung in unterschiedlichen Bereichen des Silos (502) herunterfallen. Es wird mit Vorteil dadurch erreicht, dass die Vorformlinge nicht aufgehäuft werden, sondern sich flächig im Silo (502) verteilen.

Nach Abschluss des Entleerungsvorganges kehrt die Hub-Kipp-Vorrichtung (510) in die Ausgangsstellung zurück, die in Fig. 5i dargestellt ist. Der verfahrbare Deckelabschnitt (526) wird wieder in die Geschlossenstellung gebracht, wobei dies z.B. mit Vorteil erst dann erfolgt, wenn die entleerte Transporteinheit (516) wieder aus dem Lastaufnahmemittel (512) entnommen worden ist. Die Rutsche (550) wird in ihre Ausgangsstellung verfahren, nämlich in eine Ruhestellung, und auch das Lastaufnahmemittel (512) wird in seine Ausgangsstellung verfahren. Optional kann das verfahrbare Abdeckungselement (536) des Silos (502) in der Offenstellung verbleiben und optional kann auch das rückwärtige verfahrbare Wandelement (530) des Silos (502) in der Offenstellung verbleiben, falls zum Beispiel die Entleerung einer weiteren Transporteinheit (516) in den Silo (502) vorgesehen ist. Optional kann aber auch eines der beiden verfahrbaren Elemente oder beide Elemente selbst dann in die Geschlossenstellung verfahren werden, wenn eine weitere Entleerung vorgesehen ist.

Die vorstehend beschriebenen Entleerungsstadien sind als Ausführungsbeispiele zu verstehen und die zeitliche Abfolge der geschilderten Verfahrvorgänge kann auch abweichend gewählt werden. So kann zum Beispiel das Öffnen des verfahrbaren Deckelabschnittes (526) auch bereits erfolgen, bevor die Rutsche (550) seine Entleerungsposition erreicht hat. Zum Beispiel kann die Rutsche (550) auch während der Entleerung in Rutschrichtung (X) vorgeschoben werden, wobei allerdings das Zurückziehen entgegen der Rutschrichtung (X) als vorteilhaft angesehen wird.

## Patentansprüche

1. Verfahren zum Bereitstellen eines Vorformlingsvorrates in einer Speichervorrichtung (500), welche insbesondere dem Zuführen von Vorformlingen (1) zu einer Vereinzelungs- und Sortiervorrichtung (400) für Vorformlinge (1) dient und die einen Vorratsbehälter (401, 502) für Vorformlinge (1) und eine Hub-Kipp-Vorrichtung (510) zur Befüllung des Vorratsbehälters (401, 502) mit in Transporteinheiten (516) gebindeweise zugeführten Vorformlingen (1) aufweist, wobei die Hub-Kipp-Vorrichtung (510) ausgeführt ist zur Aufnahme wenigstens einer Transporteinheit (516), zum Anheben dieser Transporteinheit (516) und zum Entleeren des Inhalts der Transporteinheit (516) in den Vorratsbehälter (401, 502) durch Kippen, wobei das Verfahren **dadurch gekennzeichnet ist, dass** vor dem Entleeren des Inhalts der Transporteinheit (516) eine verfahrbare Rutsche (550) derart positioniert wird, dass die Vorformlinge (1) aus der Transporteinheit (516) auf einen höher gelegenen Bereich (554) der Rutsche (550) entleert werden, in einer Rutschrichtung (X) auf der Rutsche (550) rutschen und dann von einem tiefer gelegenen Rutschenende (552) der Rutsche (550) in den Vorratsbehälter (401, 502) fallen, insbesondere wobei die Rutsche (550) während des Entleerens der Transporteinheit (516) verfahren wird, insbesondere in ihrem Neigungswinkel und/oder in Rutschrichtung (X) und/oder in der Höhe verfahren wird, insbesondere in der Weise, dass das Rutschenende (552) im Wesentlichen auf gleicher Höhe bleibt.

2. Verfahren nach Anspruch 1, **dadurch gekennzeichnet, dass** die Rutsche (550) in eine Ruhestellung verfahren wird, wenn eine Befüllung des Vorratsbehälters (401, 502) abgeschlossen ist, und in eine Gebrauchsstellung verfahren wird, wenn eine Befüllung des Vorratsbehälters (401, 502) erfolgen soll.

3. Verfahren nach Anspruch 1 oder 2, **dadurch gekennzeichnet, dass** eine den Vorratsbehälter (401, 502) verschließende Abdeckung (534, 536) verfahren wird, um den Vorratsbehälter (401, 502) für eine Befüllung mit Vorformlingen (1) zugänglich zu machen, insbesondere wobei diese Abdeckung (534, 536) in der Entleerungsstellung der Hub-Kipp-Vorrichtung (510) an dieser zur Ausbildung eines geschlossenen Raumes angelegt wird.

4. Verfahren nach einem der vorhergehenden Ansprüche, **dadurch gekennzeichnet, dass** eine der Hub-Kipp-Vorrichtung (510) zugewandte Wand (528, 530) des Vorratsbehälters (401, 502) zumindest bereichsweise verfahren wird, insbesondere wobei dieser verfahrbare Wandbereich (530) in der Entleerungsstellung der Hub-Kipp-Vorrichtung (510) an dieser zur Ausbildung eines geschlossenen Raumes angelegt wird.

5. Verfahren nach einem der vorhergehenden Ansprüche, wobei die Hub-Kipp-Vorrichtung (510) ein die Transporteinheiten (516) aufnehmendes Lastaufnahmemittel (512) mit einem Boden, mit Seitenwänden sowie mit einem verfahrbaren Deckel (524, 526) aufweist, der in einer Schließstellung eine Entleerungsöffnung (540) verschließt, **dadurch gekennzeichnet, dass** der verfahrbare Deckel (524, 526) bei oder nach Erreichen der Entleerungsstellung der Hub-Kipp-Vorrichtung (510) in eine die Entleerungsöffnung (555) freigebende Öffnungsstellung verfahren wird, wobei insbesondere zunächst ein Verfahren in eine erste Öffnungsstellung erfolgt und zeitlich danach ein Verfahren in eine zweite, eine größere Öffnung freigebende Öffnungsstellung.

6. Verfahren nach Anspruch 5, **dadurch gekennzeichnet, dass** das Lastaufnahmemittel (512) eine Hubeinrichtung (540) aufweist und die Transporteinheit (516) von dieser Hubeinrichtung (540) bis zur Anlage gegen den Deckel (524, 526) des Lastaufnahmemittels (512) angehoben wird.

7. Speichervorrichtung (500) für Vorformlinge (1) für die Bereitstellung eines Vorformlingsvorrates und für das Zuführen von Vorformlingen (1) zu einer Vereinzelungs- und Sortiervorrichtung (400) für Vorformlinge (1), mit einem Vorratsbehälter (401, 502) für Vorformlinge (1) und mit einer Hub-Kipp-Vorrichtung (510) zur Befüllung des Vorratsbehälters (401, 502) mit in Transporteinheiten (516) gebindeweise zugeführten Vorformlingen (1), wobei die Hub-Kipp-Vorrichtung (510) ausgeführt ist zur Aufnahme wenigstens einer Transporteinheit (516), zum Anheben dieser Transporteinheit (516) und zum Entleeren des Inhalts der Transporteinheit (516) in den Vorratsbehälter (401, 502) durch Kippen, **dadurch gekennzeichnet, dass** die Speichervorrichtung (500) eine verfahrbare Rutsche (550) aufweist, die gegenüber einer horizontalen Ebene einen Neigungswinkel und die einen höher gelegenen oberen Bereich (554) und ein tiefer gelegenes unteres Rutschenende (552) aufweist, sodass sich Vorformlinge (1) auf der Rutsche (550) in einer Rutschrichtung (X) bewegen, wobei die Rutsche (550) derart angeordnet und ausgerichtet ist, dass die kippende Entleerung der Transporteinheit (516) auf dem oberen Bereich (554) der Rutsche (550) erfolgt.

8. Speichervorrichtung (500) nach Anspruch 7, **dadurch gekennzeichnet, dass** die verfahrbare Rutsche (550) in ihrem Neigungswinkel und/oder in Rutschrichtung (X) und/oder in der Höhe verstellbar ausgeführt ist.

9. Speichervorrichtung (500) nach Anspruch 7 oder 8, **dadurch gekennzeichnet, dass** die Rutsche (550) an der Hub-Kipp-Vorrichtung (510) angeordnet ist.

10. Speichervorrichtung nach einem der Ansprüche 7 bis 9, **dadurch gekennzeichnet, dass** die Rutsche (550) aus einer Gebrauchsstellung in eine Ruhestellung verfahrbar ist.

11. Speichervorrichtung (500) nach einem der Ansprüche 7 bis 10, **dadurch gekennzeichnet, dass** der Vorratsbehälter (401, 502) mit einer verfahrbaren Abdeckung (534, 536) verschließbar ist, wobei diese Abdeckung (534, 536) in der Entleerungsstellung der Hub-Kipp-Vorrichtung (510) an dieser zur Ausbildung eines geschlossenen Raumes anliegt.

12. Speichervorrichtung (500) nach einem der Ansprüche 7 bis 11, **dadurch gekennzeichnet, dass** eine der Hub-Kipp-Vorrichtung (510) zugewandte Wand (528, 530) des Vorratsbehälters (401, 516) zumindest bereichsweise verfahrbar ausgeführt ist, wobei der verfahrbare Wandbereich (530) in der Entleerungsstellung der Hub-Kipp-Vorrichtung (510) an dieser zur Ausbildung eines geschlossenen Raumes anliegt.

13. Speichervorrichtung (500) nach einem der Ansprüche 7 bis 12, **dadurch gekennzeichnet, dass** die Hub-Kipp-Vorrichtung (510) ein die Transporteinheiten (516) aufnehmendes Lastaufnahmemittel (512) mit einem Boden, mit Seitenwänden sowie mit einem Deckel (524, 526) aufweist, wobei das Lastaufnahmemittel (512) für die Bestückung mit einer Transporteinheit (516) und für die Entnahme einer Transporteinheit (516) mit einer verschließbaren Zugangstür (514) versehen ist, wobei das Lastaufnahmemittel (512) weiterhin für die Entleerung der darin aufgenommenen Transporteinheit (516) mit einer Entleerungsöffnung (555) versehen ist, wobei die Entleerungsöffnung (555) mit einem verfahrbaren Deckelelement (526) verschliessbar ist.

14. Speichervorrichtung (500) nach Anspruch 13, **dadurch gekennzeichnet, dass** das Lastaufnahmemittel (512) eine Hubeinrichtung (540) aufweist zum Anheben der Transporteinheit (516) bis zur Anlage gegen den Deckel (524, 526) des Lastaufnahmemittels (512).

15. Speichervorrichtung (500) nach einem der Ansprüche 7 bis 14 mit einer Steuerungseinrichtung, **dadurch gekennzeichnet, dass** die Steuerungseinrichtung das Verfahren der Rutsche (550) und/oder das Verfahren der verschließenden Abdeckung (534, 536) und/oder das Verfahren des verfahrbaren Wandbereiches (530) und/oder das Verfahren des Deckels (524, 526) und/oder die Hubbewegung der Hubeinrichtung (540) steuert.

16. Speichervorrichtung (500) nach Anspruch 15, **dadurch gekennzeichnet, dass** der Vorratsbehälter (401, 502) eine den Vorratsbehälterfüllstand erfassende und mit der Steuerungseinrichtung kommunizierende Sensoreinrichtung aufweist, wobei die Steuerungseinrichtung ausgeführt ist, die Rutsche (550) abhängig von den von der Sensoreinrichtung erfassten Sensordaten zu verfahren.

## Claims

1. Method for preparing a supply of preforms in a storage device (500), which is especially used for feeding preforms (1) into a separating and sorting device (400) for preforms (1) and which comprises a storage container (401, 502) for preforms (1) and a lifting and tilting device (510) for filling the storage container (401, 502) with preforms (1) fed in bundles in transport units (516), wherein the lifting and tilting device (510) is adapted to receive at least one transport unit (516), to lift this transport unit (516) and to empty the contents of the transport unit (516) into the storage container (401, 502) by tilting, wherein the method is
**characterised in that**
before the contents of the transport unit (516) are emptied, a movable chute (550) is positioned such that the preforms (1) are emptied from the transport unit (516) onto a higher region (554) of the chute (550), slide in a sliding direction (X) on the chute (550) and then fall into the storage container (401, 502) from a lower chute end (552) of the chute (550), especially wherein the chute (550) is moved when the transport unit (516) is being emptied, especially moved in its tilt angle and/or in the sliding direction (X) and/or vertically, especially in such a way that the chute end (552) substantially remains at the same level.

2. Method according to claim 1, **characterised in that** the chute (550) is moved into an idle position when a filling of the storage container (401, 502) is completed, and moved into a position of use when a filling of the storage container (401, 502) is to take place.

3. Method according to claim 1 or 2, **characterised in that** a cover (534, 536) closing the storage container (401, 502) is moved in order to make the storage container (401, 502) accessible for a filling with preforms (1), especially wherein this cover (534, 536) is connected to the lifting and tilting device (510) in its emptying position in order to form a closed space.

4. Method according to anyone of the previous claims, **characterised in that** a wall (528, 530) of the storage container (401, 502) facing the lifting and tilting device (510) is moved at least partially, especially wherein this movable wall region (530) is connected to the lifting and tilting device (510) in its emptying position in order to form a closed space.

5. Method according to anyone of the previous claims, wherein the lifting and tilting device (510) comprises a load receiving means (512) receiving the transport units (516) with a bottom, with side walls and with a movable lid (524, 526), which closes an emptying aperture (540) in a closing position, **characterised in that** the movable lid (524, 526) is moved into an opening position opening the emptying aperture (555) upon or after reaching the emptying position of the lifting and tilting device (510), especially wherein a movement into a first opening position takes places first and thereafter a movement into a second opening position opening a bigger aperture.

6. Method according to claim 5, **characterised in that** the load receiving means (512) comprises a lifting device (540) and the transport unit (516) is lifted by this lifting device (540) until it contacts the lid (524, 526) of the load receiving means (512).

7. Storage device (500) for preforms (1) for preparing a supply of preforms and for feeding preforms (1) into a separating and sorting device (400) for preforms (1), with a storage container (401, 502) for preforms (1) and with a lifting and tilting device (510) for filling the storage container (401, 502) with preforms (1) fed in bundles in transport units (516), wherein the lifting and tilting device (510) is adapted to receive at least one transport unit (516), to lift this transport unit (516) and to empty the contents of the transport unit (516) into the storage container (401, 502) by tilting, **characterised in that** the storage device (500) comprises a movable chute (550), which comprises a tilt angle relative to a horizontal plane and which comprises a higher upper region (554) and a lower bottom chute end (552), such that preforms (1) move on the chute (550) in a sliding direction (X), wherein the chute (550) is arranged and oriented in such a way that the emptying by tilting of the transport unit (516) takes place on the upper region (554) of the chute (550).

8. Storage device (500) according to claim 7, **characterised in that** the movable chute (550) is adapted to be adjustable in its tilt angle and/or in the sliding direction (X) and/or vertically.

9. Storage device (500) according to claim 7 or 8, **characterised in that** the chute (550) is arranged at the lifting and tilting device (510).

10. Storage device according to anyone of the claims 7 through 9, **characterised in that** the chute (550) can be moved from a position of use into an idle position.

11. Storage device (500) according to anyone of the claims 7 through 10, **characterised in that** the storage container (401, 502) is closable by means of a movable cover (534, 536), wherein this cover (534, 536) is connected to the lifting and tilting device (510) in its emptying position in order to form a closed space.

12. Storage device (500) according to anyone of the claims 7 through 11, **characterised in that** a wall (528, 530) of the storage container (401, 516) facing the lifting and tilting device (510) is adapted to be movable at least partially, wherein the movable wall region (530) is connected to the lifting and tilting device (510) in its emptying position in order to form a closed space.

13. Storage device (500) according to anyone of the claims 7 through 12, **characterised in that** the lifting and tilting device (510) comprises a load receiving means (512) receiving the transport units (516) with a bottom, with side walls and with a lid (524, 526), wherein the load receiving means (512) is provided with a closable access door (514) so that it can be equipped with a transport unit (516) and so that a transport unit (516) can be removed, wherein the load receiving means (512) is further provided with an emptying aperture (555) so that the transport unit (516) it received can be emptied, wherein the emptying aperture (555) can be closed with a movable lid element (526).

14. Storage device (500) according to claim 13, **characterised in that** the load receiving means (512) comprises a lifting device (540) for lifting the transport unit (516) until it contacts the lid (524, 526) of the load receiving means (512).

15. Storage device (500) according to anyone of the claims 7 through 14 with a control device, **characterised in that** the control device controls the movement of the chute (550) and/or the movement of the closing cover (534, 536) and/or the movement of the movable wall region (530) and/or the movement of the lid (524, 526) and/or the lifting movement of the lifting device (540).

16. Storage device (500) according to claim 15, **characterised in that** the storage container (401, 502) comprises a sensor device detecting the storage container fill level and communicating with the control device, wherein the control device is adapted in such a way that it moves the chute (550) based on the sensor data collected by the sensor device.

## Revendications

1. Procédé pour la mise à disposition d'une réserve de préformes dans un dispositif d'approvisionnement (500), lequel sert notamment à amener des préformes (1) vers un dispositif de séparation et de tri (400) de préformes (1) et présente un réservoir (401, 502) pour préformes (1) et un dispositif élévateur basculant (510) pour remplir le réservoir (401, 502) avec des préformes (1) amenées sous forme d'unités de transport (516), le dispositif élévateur basculant (510) étant conçu pour recevoir au moins une unité de transport (516), pour soulever cette unité de transport (516) et pour vider le contenu de l'unité de transport (516) dans le réservoir (401, 502) par un mouvement de bascule, le procédé étant **caractérisé en ce que** avant le vidage de l'unité de transport (516) une goulotte déplaçable (550) est positionnée de façon à ce que les préformes (1) soient versées de l'unité de transport (516) sur une section (554) plus élevée de la goulotte (550), qu'elles glissent en direction (X) sur la goulotte (550) puis, d'une extrémité (552) de la goulotte (550) située à un niveau inférieur, tombent dans le réservoir (401, 502), la goulotte (550) étant notamment déplacée pendant le vidage de l'unité de transport (516) et notamment déplacée dans son angle d'inclinaison et/ou la direction de glissement et/ou en hauteur, et ce plus particulièrement de façon à ce que l'extrémité (552) de la goulotte reste essentiellement à la même hauteur.

2. Procédé selon la revendication 1, **caractérisé en ce que** la goulotte (550) est déplacée en une position de repos lorsque le remplissage du réservoir (401, 502) est achevé, et est déplacée en une position d'utilisation lorsque le remplissage du réservoir (401, 502) est nécessaire.

3. Procédé selon la revendication 1 ou 2, **caractérisé en ce qu'**un couvercle (534, 536) obturant le réservoir (401, 502) est déplacé pour permettre d'accéder au réservoir (401, 502) pour le remplir de préformes (1), ce couvercle (534, 536) étant notamment, en position de vidage du dispositif élévateur basculant (510), placé contre celui-ci pour former un espace clos.

4. Procédé selon l'une des revendications précédentes, **caractérisé en ce qu'**une paroi (528, 530) du réservoir (401, 502) faisant face au dispositif élévateur basculant (510) est en partie au moins déplacée, cette section de paroi déplaçable (530) étant notamment, en position de vidage du dispositif élévateur basculant (510), placée contre celui-ci pour former un espace clos.

5. Procédé selon l'une des revendications précédentes, le dispositif élévateur basculant (510) présentant un organe porte-charge (512) destiné à accueillir les unités de transport (516) et doté d'un fond, de parois latérales et d'un couvercle (524, 526) déplaçable qui, en une position de fermeture, obture une ouverture de vidage (540), **caractérisé en ce que** le couvercle déplaçable (524, 526), lorsque le dispositif élévateur basculant (510) atteint la position de vidage ou après qu'il l'ait atteinte, est déplacé en une position d'ouverture qui libère l'ouverture de vidage (555), le déplacement étant notamment dans un premier temps un déplacement vers une première position d'ouverture puis, avec un décalage dans le temps, un déplacement vers une seconde position d'ouverture qui libère une ouverture plus grande.

6. Procédé selon la revendication 5, **caractérisé en ce que** l'organe porte-charge (512) présente un dispositif de levage (540) et que l'unité de transport (516) est levée par ce dispositif de levage (540) jusque contre le couvercle (524, 526) de l'organe porte-charge (512).

7. Dispositif d'approvisionnement (500) en préformes (1) pour la mise à disposition d'une réserve de préformes et amener des préformes (1) vers un dispositif de séparation et de tri (400) de préformes (1), avec un réservoir (401, 502) pour préformes (1) et un dispositif élévateur basculant (510) pour remplir le réservoir (401, 502) avec des préformes (1) amenées sous forme d'unités de transport (516), le dispositif élévateur basculant (510) étant conçu pour recevoir au moins une unité de transport (516), pour soulever cette unité de transport (516) et pour vider le contenu de l'unité de transport (516) dans le réservoir (401, 502) par un mouvement de bascule, **caractérisé en ce que** le dispositif d'approvisionnement (500) présente une goulotte (550) déplaçable présentant un angle d'inclinaison par rapport à un plan horizontal, une section supérieure (554) plus élevée et une extrémité (552) de la goulotte située à un niveau inférieur, de sorte que des préformes (1) se déplacent dans la goulotte (550) selon une direction de glissement (X), la goulotte (550) étant positionnée et orientée de façon à ce que le vidage par basculement de l'unité de transport (516) ait lieu sur la section supérieure (554) de la goulotte (550).

8. Dispositif d'approvisionnement (500) selon la revendication 7, **caractérisé en ce que** la goulotte déplaçable (550) est réalisée de façon à pouvoir en régler l'angle d'inclinaison et/ou la direction de glissement (X) et/ou la hauteur.

9. Dispositif d'approvisionnement (500) selon la revendication 7 ou 8, **caractérisé en ce que** la goulotte (550) est agencée au niveau du dispositif élévateur basculant (510).

10. Dispositif d'approvisionnement selon l'une des revendications 7 à 9, **caractérisé en ce que** la goulotte (550) est déplaçable d'une position d'utilisation vers une position de repos.

11. Dispositif d'approvisionnement (500) selon l'une des revendications 7 à 10, **caractérisé en ce que** le réservoir (401, 502) peut être obturé à l'aide d'un couvercle (534, 536) déplaçable, ce couvercle (534, 536) étant, en position de vidage du dispositif élévateur basculant (510), placé contre celui-ci pour former un espace clos.

12. Dispositif d'approvisionnement (500) selon l'une des revendications 7 à 11, **caractérisé en ce qu'**une paroi (528, 530) du réservoir (401, 516) faisant face au dispositif élévateur basculant (510) est réalisé de façon à être en partie au moins déplaçable, la section de paroi déplaçable (530) étant, en position de vidage du dispositif élévateur basculant (510), placée contre celui-ci pour former un espace clos.

13. Dispositif d'approvisionnement (500) selon l'une des revendications 7 à 12, **caractérisé en ce que** le dispositif élévateur basculant (510) présente un organe porte-charge (512) destiné à accueillir les unités de transport (516) et doté d'un fond, de parois latérales et d'un couvercle (524, 526), l'organe porte-charge (512) étant muni d'une porte d'accès (514) pouvant être fermée et permettant mise en place d'une unité de transport (516) et l'extraction d'une unité de transport (516) et l'organe porte-charge (512) étant en outre muni d'une ouverture de vidage (555) pour vider l'unité de transport (516) qu'il contient, l'ouverture de vidage (555) pouvant être obturée au moyen d'un élément formant couvercle (526).

14. Dispositif d'approvisionnement (500) selon la revendication 13, **caractérisé en ce que** l'organe porte-charge (512) présente un dispositif de levage (540) pour lever l'unité de transport (516) jusque contre le couvercle (524, 526) de l'organe porte-charge (512).

15. Dispositif d'approvisionnement (500) selon l'une des revendications 7 à 14 doté d'un dispositif de commande, **caractérisé en ce que** le dispositif de commande commande le déplacement de la goulotte (550) et/ou le déplacement du couvercle d'obturation (534, 536) et/ou le déplacement de la section de paroi déplaçable (530) et/ou le déplacement du couvercle (524, 526) et/ou le mouvement de levage du dispositif de levage (540).

16. Dispositif d'approvisionnement (500) selon la revendication 15, **caractérisé en ce que** le réservoir (401, 502) est équipé d'un dispositif détecteur qui détecte le niveau de remplissage du réservoir et communique avec le dispositif de commande, ce dispositif de commande étant réalisé de façon à déplacer la goulotte (550) en fonction des données détectées par le dispositif détecteur.
